# EUROPEAN PATENT APPLICATION

(11) **EP 4 734 264 A1**
(43) Date of publication of application: **29.04.2026**
(21) Application number: 25205930.8
(22) Date of filing: 01.10.2025
(51) Int. Cl.: H01M 50/474, H01M 50/188, H01M 50/186, H01M 50/184, H01M 50/176, H01M 50/169, H01M 50/15

(54) **SECONDARY BATTERY, BATTERY PACK, AND METHOD OF MANUFACTURING SECONDARY BATTERY**

(30) Priority: 28.10.2024 KR 20240148714
(71) Applicant: SAMSUNG SDI CO., LTD., Yongin-si, Gyeonggi-do 17084 (KR)
(72) Inventor: KYUNG, Se In, 16678 Suwon-si, Gyeonggi-do (KR); YONG, Jun Sun, 16678 Suwon-si, Gyeonggi-do (KR); BAE, Kwang Soo, 16678 Suwon-si, Gyeonggi-do (KR); LEE, Jun Hyung, 16678 Suwon-si, Gyeonggi-do (KR); KIM, Ji Hwan, 16678 Suwon-si, Gyeonggi-do (KR); ROH, Heyoung Cheoul, 16678 Suwon-si, Gyeonggi-do (KR)
(74) Representative: Gulde & Partner

(57) **Abstract**

A secondary battery, including a case having an opening, an electrode assembly accommodated inside the case, and a cap assembly, including a cap plate closing the opening, a terminal coupled to the cap plate, a gasket supporting the terminal, the gasket connected to the cap plate and including an insulating material, and an insulating member including an insulating material, the insulating member being between the cap plate and the electrode assembly inside the case, the insulating member being coupled to the gasket.

## Description

### BACKGROUND

### 1. Field

The present disclosure relates to a secondary battery, a battery pack, and a method of manufacturing a secondary battery.

### 2. Description of the Related Art

A secondary battery is a battery including a positive electrode and a negative electrode, which include active materials capable of intercalating and deintercalating lithium ions, and an electrolyte, and produces electrical energy through an oxidation reaction and a reduction reaction when the lithium ions are intercalated into and deintercalated from the positive electrode and the negative electrode.

The secondary battery may include an insulating member between an electrode assembly inserted into a case and a cap plate closing an opening of the case. In a manufacturing process of the secondary battery, the insulating member may be attached to the electrode assembly by, for example, a double-sided adhesive tape.

The aforementioned information disclosed in this background section is merely for enhancement of understanding of the background technology of the present disclosure, and therefore may contain information that does not constitute the related art.

### SUMMARY

Embodiments include a secondary battery, including a case having an opening, an electrode assembly accommodated inside the case, and a cap assembly including a cap plate closing the opening, a terminal coupled to the cap plate, a gasket supporting the terminal, the gasket connected to the cap plate and including an insulating material, and an insulating member including an insulating material, the insulating member being between the cap plate and the electrode assembly inside the case, and the insulating member being coupled to the gasket.

The gasket may further include an inner plate portion stacked on a side surface of the cap plate toward the electrode assembly, and a hook protruding in a direction from the inner plate portion toward the electrode assembly, wherein the insulating member includes a hook fastening portion to which the hook is fastened.

The hook fastening portion may include a hook through hole in which the hook is inserted (e.g. through which the hook passes).

The hook may include a hook body portion protruding from the inner plate portion, and a hook head portion protruding from one side end portion of the hook body portion in a direction intersecting a longitudinal direction of the hook body portion, the hook head portion being lock with the hook through hole (e.g. being around the hook through hole). The hook (e.g. the hook through hole) may not be separated from the hook through hole when passing (e.g. once passed) through the hook through hole. For instance, the hook head portion is adapted to interlock the hook in the hook through hole. The hook may be elastic and bendable in one direction, as to allow the hook to be inserted into the hook through hole and to interlock the lock in the hook through hole with the hook head portion once the hook head portion is passed through the hook through hole.

The hook may include a plurality of hooks, the plurality of hooks including a plurality of hook body portions and a plurality of hook head portions, and a direction in which at least one of the plurality of hook head portions protrudes differs from a direction in which another of the plurality of hook head portions protrudes.

The insulating member may include a first spacing portion spaced apart from the cap plate, the first spacing portion including the hook through hole, and a second spacing portion connected stepwise to the first spacing portion, the second spacing portion being further apart from the cap plate than the first spacing portion, and a size of a gap between the second spacing portion and the first spacing portion is larger than a thickness of the hook head portion.

The hook may include multiple pairs of hooks, wherein the plurality of pairs of hooks include a plurality of hook through holes, each of the plurality of hook through holes corresponding to one of the plurality of pairs of hooks.

The multiple pairs of hooks may include a plurality of hook head portions passing through the plurality of hook through holes, the plurality of hook head portions and the plurality of hook through holes protruding in a same direction.

The multiple pairs of hooks may be in the plurality of hook through holes, the multiple pairs of hooks and the plurality of hook through holes being spaced apart from each other.

When each pair of hooks of the multiple pairs of hooks are fitted into one of the hook through holes, a pair of hook body portions included in the pair of hooks may come into close contact with an inner surface of one hook through hole, the pair of body portions being pressed in a direction closer to each other.

Each of the pair of hooks fitted into one hook through hole may further include a hook rib portion protruding from one hook body portion of the pair of hooks and extending in the longitudinal direction of the hook body portion so as to come into close contact with the inner surface of the one hook through hole.

Embodiments include a battery pack, including a housing, and a plurality of secondary batteries in the housing, wherein each of the plurality of the secondary batteries includes a case with an opening, an electrode assembly accommodated inside the case, and a cap assembly including a cap plate closing the opening, a terminal coupled to the cap plate, and an insulating member including an insulating material, the insulating member being between the cap plate and the electrode assembly inside the case, the insulating member being coupled to the cap plate.

Embodiments include a method of manufacturing a secondary battery, the method including coupling a gasket to a cap plate, the gasket including an insulating material, coupling an insulating member to the gasket, the insulating member including an insulating material, inserting an electrode assembly into a case through an opening of the case, closing the opening with the cap plate such that the insulating member is between the cap plate and the electrode assembly inside the case, and coupling the cap plate to the case by welding.

The gasket may include an inner plate portion stacked on a side surface of the cap plate toward the electrode assembly and a hook (e.g. a pair of hooks) protruding from the inner plate portion in a direction toward the electrode assembly, the insulating member may include a hook fastening portion to which the hook (e.g. a pair of hooks) is fastened, and coupling of the insulating member may include aligning the hook fastening portion with the hook (e.g. a pair of hooks) and approximating the hook fastening portion to the gasket to couple the insulating member to the gasket.

Preferably, the hook fastening portion may include a hook through hole with an inner surface thereof, and each hook of the pair of hooks may include a hook body portion; and in the method the coupling of the insulating member to the gasket may further include that when the pair of hooks are fitted into the hook through hole, the hook body portions included in the pair of hooks may come into close contact with the inner surface of the hook through hole, and the pair of body portions are pressed in a direction closer to each other.

The method may further include coupling a current collecting member to an electrode tab of the electrode assembly between inserting the electrode assembly and closing the opening, mounting a terminal on the gasket, and coupling the terminal to the current collecting member by welding after welding the cap plate.

### BRIEF DESCRIPTION OF THE DRAWINGS

Features will become apparent to those of ordinary skill in the art by describing in detail exemplary embodiments with reference to the attached drawings, in which:
FIG. 1 is a perspective view showing a secondary battery according to one or more embodiments of the present disclosure;
FIG. 2 is an exploded perspective view of the secondary battery according to one or more embodiments of the present disclosure;
FIG. 3 is a cross-sectional view taken along line S1-S1 of FIG. 1;
FIG. 4 is an exploded perspective view schematically showing a configuration of an electrode assembly of FIG. 3;
FIG. 5 is a perspective view showing a cap assembly of FIG. 2 in an assembled state;
FIG. 6 is an exploded perspective view showing an insulating member separated from a gasket in the cap assembly of FIG. 5;
FIG. 7 is a plan view showing an inner plate portion of the gasket in FIG. 6;
FIG. 8 is an enlarged perspective view of portion A of FIG. 7;
FIG. 9 is an enlarged plan view of portion B of FIG. 6;
FIG. 10 is a cross-sectional view taken along line S2-S2 of FIG. 5;
FIG. 11 is a perspective view showing a modified example of a hook shown in FIG. 8 according to one or more embodiments of the present disclosure;
FIG. 12 is a cross-sectional view showing the hook of FIG. 11 fitted into a hook through hole of FIG. 10;
FIG. 13 is a flowchart showing a method of manufacturing a secondary battery according to one or more embodiments of the present disclosure; and
FIG. 14 is a perspective view schematically showing a battery pack according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

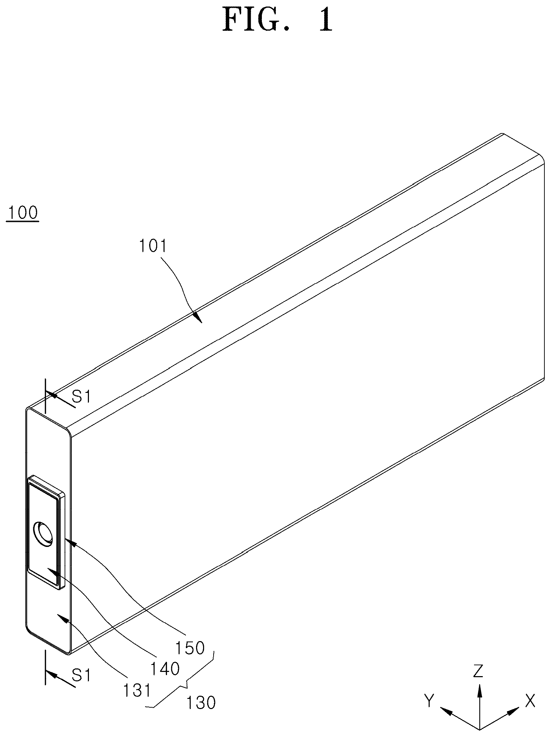

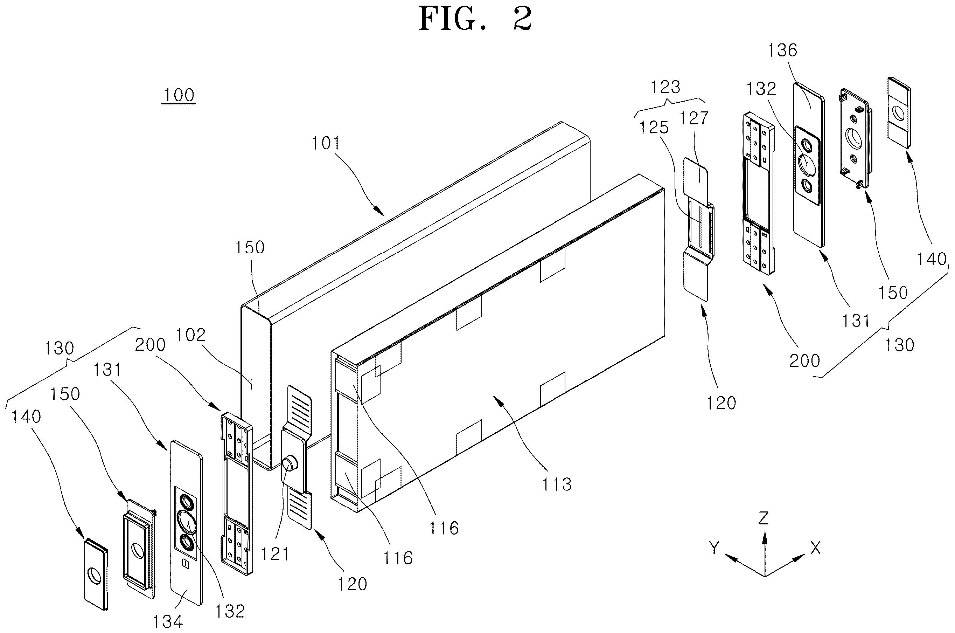

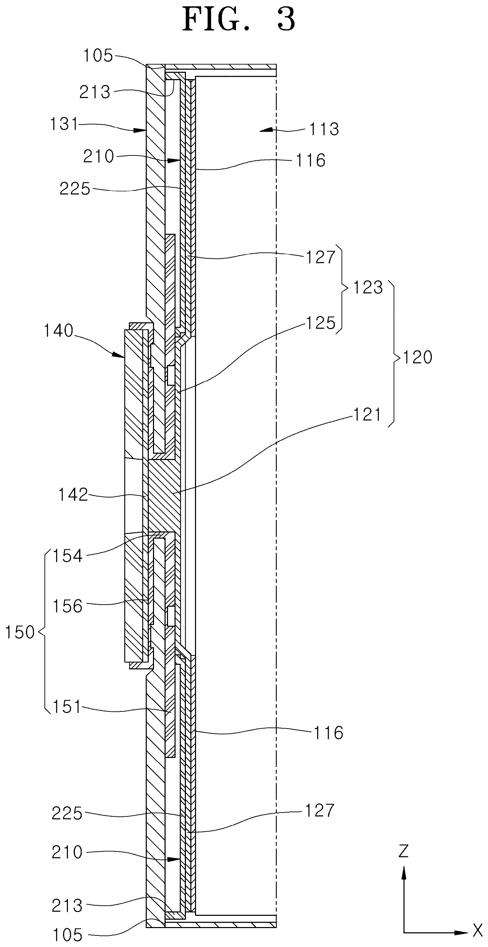

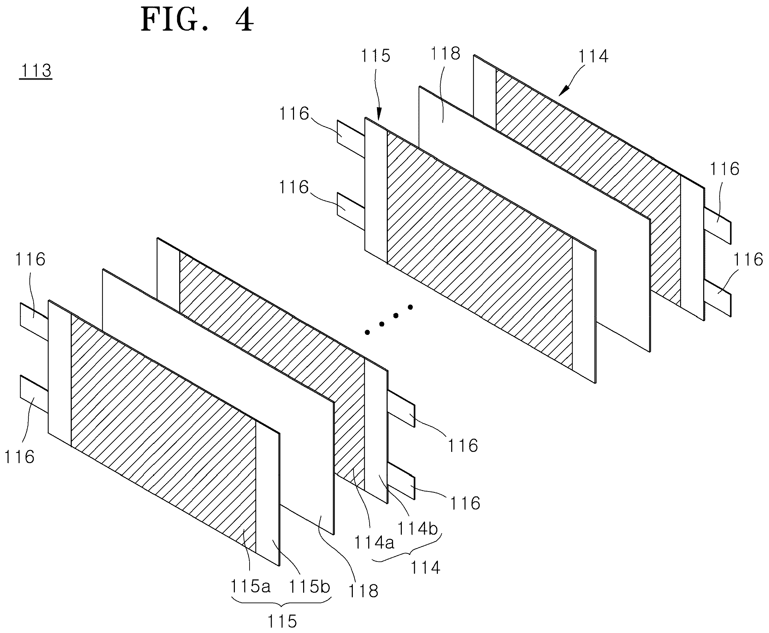

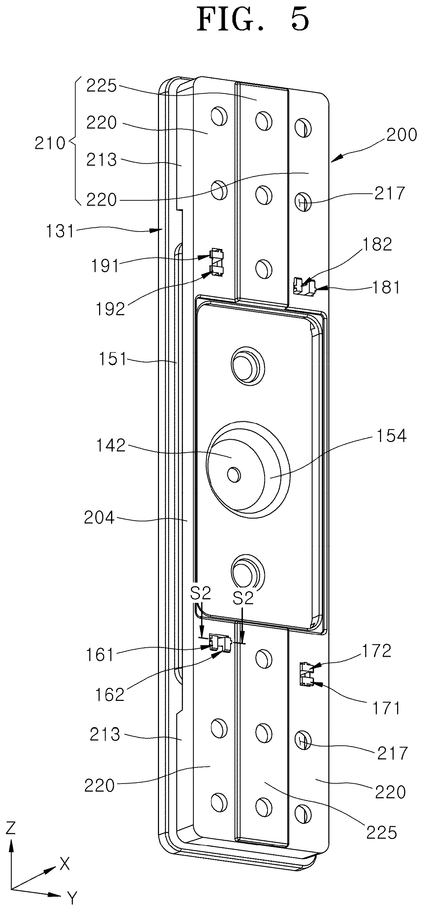

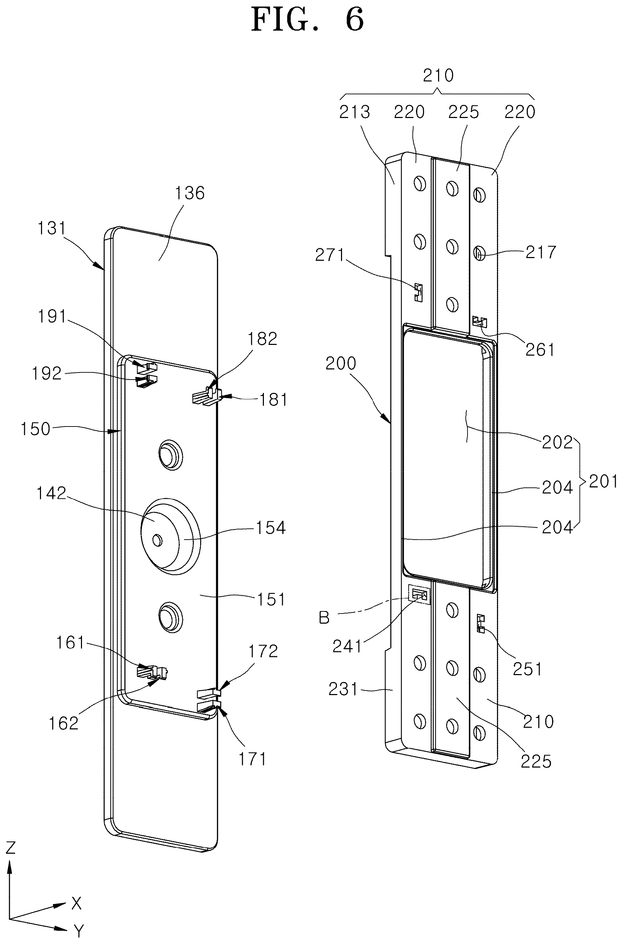

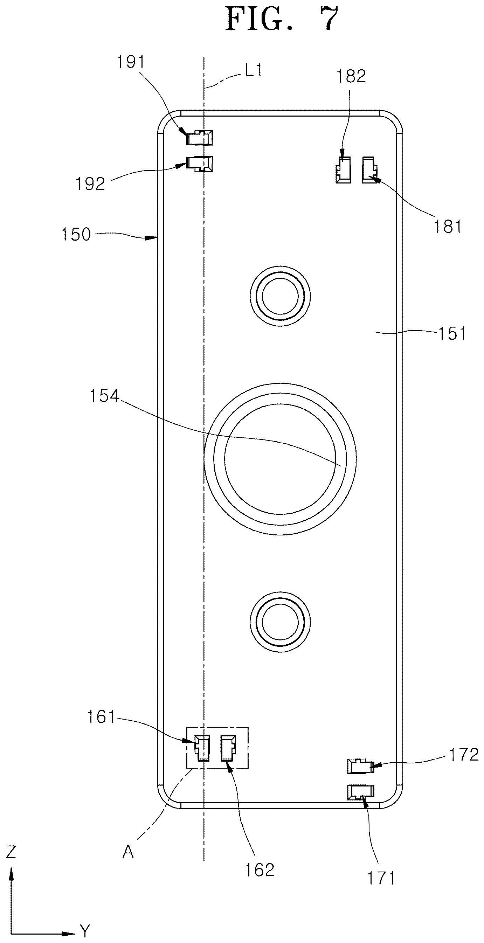

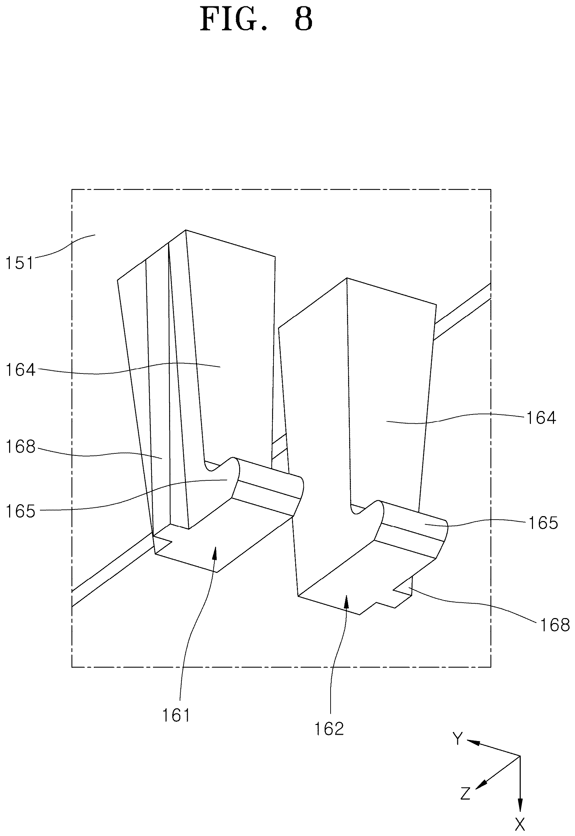

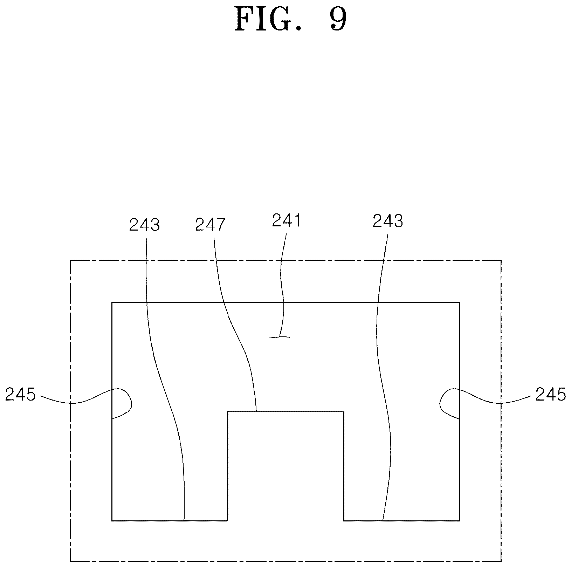

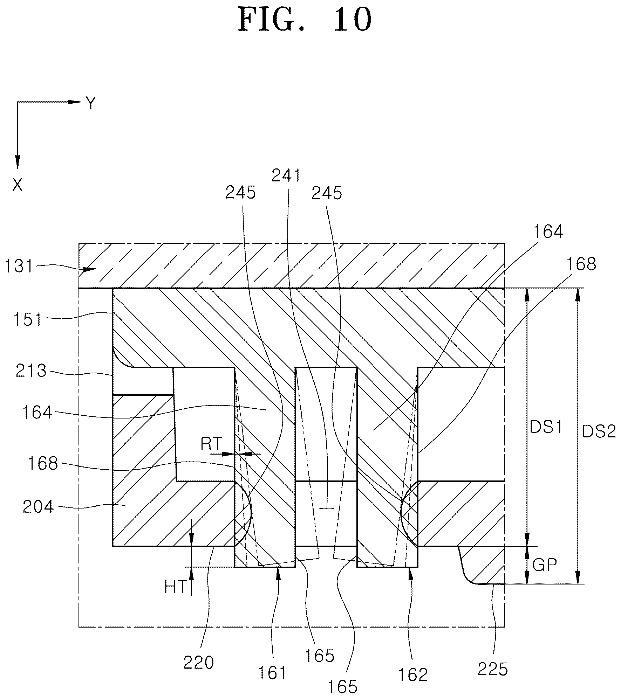

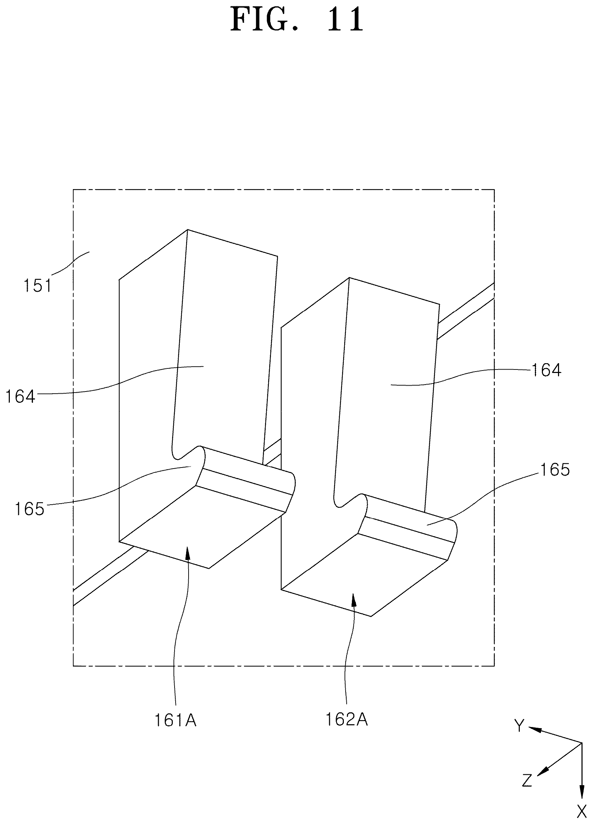

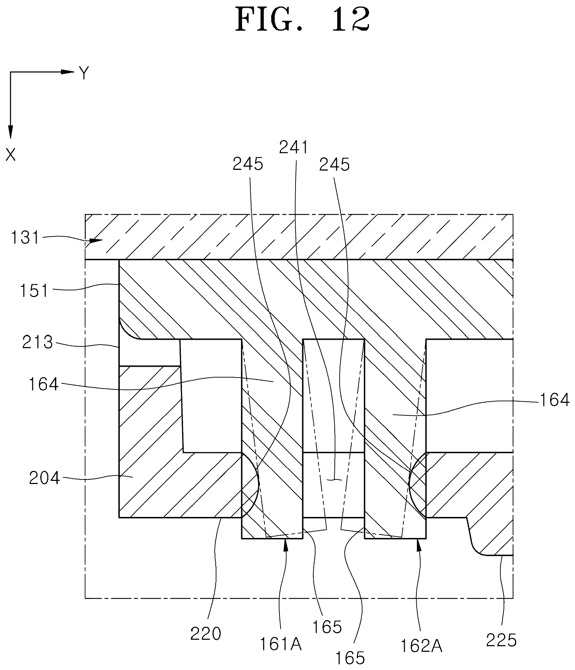

FIG. 1 is a perspective view showing a secondary battery according to one or more embodiments of the present disclosure, FIG. 2 is an exploded perspective view of the secondary battery according to one or more embodiments of the present disclosure, FIG. 3 is a cross-sectional view taken along line S1-S1 of FIG. 1, FIG. 4 is an exploded perspective view schematically showing a configuration of an electrode assembly of FIG. 3, FIG. 5 is a perspective view showing a cap assembly of FIG. 2 in an assembled state, FIG. 6 is an exploded perspective view showing an insulating member separated from a gasket in the cap assembly of FIG. 5, FIG. 7 is a plan view showing an inner plate portion of the gasket in FIG. 6, FIG. 8 is an enlarged perspective view of portion A of FIG. 7, FIG. 9 is an enlarged plan view of portion B of FIG. 6, FIG. 10 is a cross-sectional view taken along line S2-S2 of FIG. 5, FIG. 11 is a perspective view showing a modified example of a hook shown in FIG. 8, and FIG. 12 is a cross-sectional view showing the hook of FIG. 11 fitted into a hook through hole of FIG. 10.

Hereinafter, an example in which a secondary battery is a prismatic secondary battery as a lithium-ion secondary battery will be described. However, the secondary battery may be a lithium polymer battery or a cylindrical battery.

Referring to FIGS. 1 to 10, a secondary battery 100 according to an embodiment of the present disclosure includes a case 101, an electrode assembly 113, and a cap assembly 130.

The case 101 may form an approximate appearance of the secondary battery 100 and accommodate the electrode assembly 113. The case 101 may be a member having a substantially rectangular parallelepiped shape extending in a horizontal direction (e.g., in the Z-axis direction), may be provided with an internal space in which the electrode assembly 113 is accommodated therein, and may be provided with a pair of openings 102 that are open at both sides in the longitudinal direction (e.g., the X-axis direction).

The electrode assembly 113 may be accommodated inside the case 101. The electrode assembly 113 may function as a unit structure that performs charging and discharging operations of power in the secondary battery. The electrode assembly 113 may include a first electrode 114, a second electrode 115, and a separator 118 disposed between the first electrode 114 and the second electrode 115. A plurality of first electrodes 114, separators 118, and second electrodes 115 may be provided.

Hereinafter, an example in which the electrode assembly 113 has a stack form in which a plurality of first electrodes 114, separators 118, and second electrodes 115 are sequentially stacked in a second direction will be described. However, the electrode assembly 113 may have a form in which the first electrode 114, the separator 118, and the second electrode 115 are wound in a clockwise direction or a counterclockwise direction around a winding axis in a state in which the first electrode 114, the separator 118, and the second electrode 115 are stacked.

The first electrode 114 may function as any one of a positive electrode and a negative electrode of the electrode assembly 113. Hereinafter, an example in which the first electrode 114 is the positive electrode of the electrode assembly 113 will be described. However, the first electrode 114 may also function as the negative electrode of the electrode assembly 113.

The first electrode 114 according to the present embodiment may be formed to have a form of a foil including a metallic material such as aluminum or an aluminum alloy. The type, size, shape, etc. of the first electrode 114 may vary, as long as the first electrode 114 has conductivity without causing a chemical change in the secondary battery. The cross-sectional shape of the first electrode 114 may be designed to have various shapes other than the rectangular shape shown in FIG. 4.

A plurality of first electrodes 114 may be provided. The plurality of first electrodes 114 may be arranged in a thickness direction of the secondary battery 100 between a front surface portion and a rear surface portion of the case 101. The number of first electrodes 114 may be variably designed depending on the charging capacity, etc. of the secondary battery 100.

A first active material layer may be coated on at least a portion of the first electrode 114. The first active material layer may be coated on both surfaces of the first electrode 114, or may be coated on only one surface of the first electrode 114.

In the present embodiment, as the first electrode 114 functions as the positive electrode, the first active material layer may include a positive electrode active material.

The positive electrode active material may be a compound capable of reversible intercalation and deintercalation of lithium (a lithiated intercalation compound). More specifically, at least one of composite oxides of a metal selected from cobalt, manganese, nickel, iron, and a combination thereof and lithium may be used as the positive electrode active material.

For example, the positive electrode active material may include at least one of a lithium-iron-phosphate oxide (LiFePO₄, LFP), a lithium-manganese-iron-phosphate oxide (LiMnFePO₄, LMFP), and a lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of a lithium-iron-phosphate oxide (LiFePO₄, LFP), a lithium-manganese-iron-phosphate oxide (LiMnFePO₄, LMFP), and a lithium-nickel-cobalt-manganese oxide (LiNiₓCo_{y}Mn_{z}O₂, NCM), or may include any two or all of a lithium-iron-phosphate oxide (LiFePO₄, LFP), a lithium-manganese-iron-phosphate oxide (LiMnFePO₄, LMFP), and a lithium-nickel-cobalt-manganese oxide (LiNiₓCo_{y}Mn_{z}O₂, NCM).

The first active material layer may further include a positive electrode conductive material.

The positive electrode conductive material may be used to impart conductivity to the first active material layer, and any electronically conductive material that does not cause a chemical change may be used. Examples of the positive electrode conductive material may include a carbon material such as natural graphite, artificial graphite, carbon black, acetylene black, Ketjen black, carbon fibers, carbon nanofibers, carbon nanotubes, a metal material in the form of a metal powder or metal fiber containing copper, nickel, aluminum, silver, etc., a conductive polymer such as a polyphenylene derivative, or a mixture thereof.

The first active material layer may further include a positive electrode binder.

The positive electrode binder may serve to attach particles constituting the positive electrode active material to each other well and to also attach the positive electrode active material to the first electrode 114 well. A non-aqueous binder, an aqueous binder, a dry binder, or a combination thereof may be used as the positive electrode binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene monomer copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the positive electrode binder, a cellulose compound may be further contained to impart viscosity. As the cellulose compound, one or more types, such as carboxymethyl cellulose, hydroxypropyl methyl cellulose, methyl cellulose, or alkali metal salts thereof may be used in combination. As the alkali metal, Na, K, or Li may be used.

The dry binder is a polymer material that may be fiberized, such as polytetrafluoroethylene, polyvinylidene fluoride, a polyvinylidene fluoride-hexafluoropropylene copolymer, polyethylene oxide, or a combination thereof.

The first electrode 114 may include a first uncoated portion on which the first active material layer is not coated. The first uncoated portion may be disposed in end portion regions of both sides of the first electrode 114, which are disposed toward both openings 102 inside the case 101. However, the first uncoated portion may be formed over the entire edge region of the first electrode 114.

Hereinafter, a longitudinal direction of the secondary battery 100 will be referred to as a first direction, a thickness direction of the secondary battery 100 as a second direction, and a width direction of the secondary battery 100 as a third direction. In FIGS. 1 to 10, the first direction may be a direction parallel to an X-axis, the second direction may be a direction parallel to a Y-axis, and the third direction may be a direction parallel to a Z-axis.

The second electrode 115 may function as the other of the positive electrode and the negative electrode of the electrode assembly 113. Hereinafter, an example in which the second electrode 115 is the negative electrode of the electrode assembly 113 will be described. However, the second electrode 115 may also function as the positive electrode of the electrode assembly 113.

A plurality of second electrodes 115 may be provided. The plurality of second electrodes 115 may be arranged in the thickness direction of the secondary battery 100 (e.g., a direction parallel to the Y-axis). The first electrode 114 and the second electrode 115 may be alternately disposed in the thickness direction of the secondary battery 100. The second electrode 115 may be spaced a predetermined distance apart from the first electrode 114 in the second direction.

The second electrode 115 according to the present embodiment may have a form of a foil including a metallic material such as copper, a copper alloy, nickel, or a nickel alloy. The type, size, shape, etc. of the second electrode 115 may vary, as long as the second electrode 115 has conductivity without causing a chemical change in the secondary battery. The cross-sectional shape of the second electrode 115 may be designed in various shapes other than the rectangular shape shown in FIG. 4.

A second active material layer may be coated on at least a portion of the second electrode 115. The second active material layer may be coated on both surfaces of the second electrode 115, or alternatively, coated on only one surface of the second electrode 115.

As the second electrode 115 functions as the negative electrode, the second active material layer may include a negative electrode active material.

The negative electrode active material may include a material capable of reversible intercalation/deintercalation of lithium ions, lithium metal, an alloy of lithium and a metal, a material capable of doping and dedoping lithium, or a transition metal oxide.

The material capable of reversible intercalation/deintercalation of lithium ions may be a carbon negative electrode active material, which may include, for example, crystalline carbon, amorphous carbon, or a combination thereof. Examples of the crystalline carbon may include graphite, such as amorphous, plate-like, flaky, spherical, or fibrous natural graphite or artificial graphite, and examples of the amorphous carbon may include soft carbon, hard carbon, mesophase pitch carbide, calcined coke, etc.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si negative electrode active material or a Sn negative electrode active material may be used. The Si negative electrode active material may include silicon, a silicon-carbon composite, SiOₓ (0<x<2), a Si-Q alloy (Q is selected from an alkali metal, an alkaline earth metal, a group 13 element, a group 14 element (excluding Si), a group 15 element, a group 16 element, a transition metal, a rare earth element, and a combination thereof), or a combination thereof. The Sn negative electrode active material may be Sn, SnO₂, a Sn alloy, or a combination thereof.

The silicon-carbon composite may be a composite of silicon and amorphous carbon. According to one embodiment, the silicon-carbon composite may be in the form of silicon particles and amorphous carbon coated on surfaces of the silicon particles. For example, the silicon-carbon composite may include a secondary particle (core) in which silicon primary particles are assembled and an amorphous carbon coating layer (shell) located on a surface of the secondary particle. The amorphous carbon may also be located between the silicon primary particles, for example, the silicon primary particles may be coated with the amorphous carbon. The secondary particle may be present by being dispersed in an amorphous carbon matrix.

The silicon-carbon composite may further include crystalline carbon. For example, the silicon-carbon composite may include a core containing crystalline carbon and silicon particles and an amorphous carbon coating layer located on the surface of the core.

The Si negative electrode active material or the Sn negative electrode active material may be used in combination with a carbon negative electrode active material.

The second active material layer may further include a negative electrode conductive material and a negative electrode binder.

The negative electrode conductive material may be used to impart conductivity to the second active material layer, and any electronically conductive material that does not cause a chemical change may be used. Examples of the negative electrode conductive material may include a carbon material such as natural graphite, artificial graphite, carbon black, acetylene black, Ketjen black, carbon fibers, carbon nanofibers, carbon nanotubes, a metal material in the form of a metal powder or metal fiber containing copper, nickel, aluminum, silver, etc., a conductive polymer such as a polyphenylene derivative, or a mixture thereof.

The negative electrode binder may serve to attach particles constituting the negative electrode active material to each other well and to also attach the negative electrode active material to the second electrode 115 well.

A non-aqueous binder, an aqueous binder, a dry binder, or a combination thereof may be used as the negative electrode binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene monomer copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose compound may be further contained to impart viscosity. This cellulose compound may be used by mixing one or more of carboxymethyl cellulose, hydroxypropyl methyl cellulose, methyl cellulose, or an alkali metal salt of one of these. As the alkali metal, Na, K, or Li may be used.

The dry binder is a polymer material that may be fiberized, such as polytetrafluoroethylene, polyvinylidene fluoride, a polyvinylidene fluoride-hexafluoropropylene copolymer, polyethylene oxide, or a combination thereof.

The second electrode 115 may include a second uncoated portion on which the second active material layer is not coated. The second uncoated portion according to the present embodiment may be disposed in end portion regions of both sides of the second electrode 115, which are disposed toward the pair of openings 102 inside the case 101. However, the second uncoated portion may be formed over the entire edge region of the second electrode 115.

The separator 118 may be disposed between the first electrode 114 and the second electrode 115. The separator 118 may perform a function of preventing a short circuit between the first electrode 114 and the second electrode 115 while allowing the movement of lithium ions between the first electrode 114 and the second electrode 115.

The separator 118 may be disposed to entirely cover a surface region of the electrode assembly 113. Accordingly, the separator 118 may prevent the first electrode 114 and the second electrode 115 from being directly exposed to the outside of the electrode assembly 113.

As the separator 118, polyethylene, polypropylene, polyvinylidene fluoride, or a multilayered film of two or more layers thereof may be used, and a mixed multilayered film such as a polyethylene/polypropylene two-layer separator, a polyethylene/polypropylene/polyethylene three-layer separator, or a polypropylene/polyethylene/polypropylene three-layer separator may also be used.

The separator 118 may include a porous substrate and a coating layer containing an organic material, an inorganic material, or a combination thereof located on one surface or both surfaces of the porous substrate.

The porous substrate may be a polymer film formed of any one of a polymer, or a copolymer or mixture of two or more of these selected from polyolefins such as polyethylene or polypropylene, polyesters such as polyethylene terephthalate or polybutylene terephthalate, polyacetal, polyamide, polyimide, polycarbonate, polyether ketone, polyarylether ketone, polyetherimide, polyamideimide, polybenzimidazole, polyethersulfone, a polyphenylene oxide, a cyclic olefin copolymer, polyphenylene sulfide, polyethylene naphthalate, a glass fiber, Teflon, and polytetrafluoroethylene.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but others are possible.

The organic material and the inorganic material may be present by being mixed in one coating layer or may be present in a form in which a coating layer containing an organic material and a coating layer containing an inorganic material are stacked.

An electrode tab 116 (see FIG. 4) is connected to the uncoated portion of the first electrode 114 or the second electrode 115. Specifically, the electrode tab 116 connected to the first electrode 114 may protrude toward a terminal 140 at one side (see FIG. 2), and the electrode tab 116 connected to the second electrode 115 may protrude toward a terminal 140 at the other side.

A current collecting member 120 (see FIG. 2) is electrically coupled to the electrode tab 116. The current collecting member 120 may include a subplate portion 123 and a current collector portion 121. The subplate portion 123 may be electrically coupled to the electrode tab 116, for example, by welding.

The subplate portion 123 may include a central portion 125 (see FIG. 2) aligned with the terminal 140 in the first direction and a pair of wing portions 127 connected stepwise to both sides of the central portion 125 in the third direction (e.g., a direction parallel to the Z-axis). The electrode tab 116 may be electrically coupled to the pair of wing portions 127.

The current collector portion 121 may be electrically coupled to the terminal 140. The current collector portion 121 may protrude to pass through a cap plate 131 from the central portion 125 in the first direction.

The cap assembly 130 may include the cap plate 131, the terminal 140, a gasket 150, and an insulating member 200. The secondary battery 100 according to one embodiment of the present disclosure may include a pair of cap assemblies 130. Each of the pair of cap assemblies 130 may be disposed at each side of the case 101 in the first direction to close the pair of openings 102 of the case 101. The secondary battery 100 may be a so-called 'side-type prismatic secondary battery.'

However, a secondary battery according to one or more other embodiments of the present disclosure may be, for example, a prismatic secondary battery that includes one cap assembly closing one opening formed on an upper side of the case. In this case, one cap assembly may include a pair of terminals disposed to be spaced apart from each other.

The cap plate 131 may close the opening 102. For example, the cap plate 131 may be fixedly joined to the case 101 by welding an outer peripheral portion of the cap plate 131 to an edge 105 limiting the opening 102.

The terminal 140 may be coupled to the cap plate 131. For example, the terminal 140 may be coupled (e.g. mechanically coupled) to the cap plate 131 while being supported (e.g. enclosed and sealed) by the gasket 150. In other words, the terminal 140 is enclosed in the gasket 150 and the terminal 140 is mechanically coupled to the cap plate 131 by means of the gasket 150. The terminal 140 may protrude outward from the cap plate 131. The terminal 140 may be electrically connected to one of the first electrode 114 and the second electrode 115.

An upper end portion of the terminal 140 may protrude from the cap plate 131 in the first direction. In the drawings, an example in which the terminal 140 has a quadrangular cross-sectional shape is shown, but the cross-sectional shape of the terminal 140 may be designed in various shapes such as a circular shape, an elliptical shape, or a polygonal shape. The terminal 140 may be formed of an electrically conductive material such as aluminum, nickel, or copper.

The terminal 140 may include a central portion thinner than surrounding portions. The central portion of the terminal 140 may be aligned with the current collector portion 121 in the first direction and may be electrically coupled to the current collector portion 121 by welding.

A central through hole 132 (see FIG. 2) through which the current collector portion 121 passes may be formed in the central portion of the cap plate 131 so that the current collector portion 121 may be welded to the central portion of the terminal 140 by passing through the cap plate 131.

The gasket 150 may support (e.g. enclose and seal) the terminal 140 and may be joined to the cap plate 131. The gasket 150 may electrically insulate the cap plate 131 and the terminal 140 and prevent moisture or foreign substances from being introduced between the cap plate 131 and the terminal 140.

The gasket 150 may include an insulating material. The gasket 150 may be formed of an (electrically) insulating material, which is for instance an elastic polymer. For example, the gasket 150 may be formed of an insulating material such as polyethylene (PE), polypropylene (PP), polyethylene terephthalate (PET), or rubber. The gasket 150 may be fixed between the cap plate 131 and the terminal 140 by, for example, press-fitting, injection, adhesion, or the like.

The gasket 150 may include a terminal support portion 156 (see FIG. 3), an inner plate portion 151, and a connecting portion 154. The terminal 140 may be seated on the terminal support portion 156. The terminal support portion 156 may be mounted on an outer surface 134 of the cap plate 131 that is exposed to the outside.

The inner plate portion 151 (see FIG. 3) may be stacked on a side surface 136 (see FIG. 2) of the cap plate 131 toward the electrode assembly 113. The side surface 136 of the cap plate 131 toward the electrode assembly 113 may be an inner surface 136 opposite to the outer surface 134. The connecting portion 154 is an annular portion passing through the central through hole 132 and may connect the inner plate portion 151 to the terminal support portion 156. The connecting portion 154 may surround the current collector portion 121 of the current collecting member 120.

The insulating member 200 may be disposed between the cap plate 131 and the electrode assembly 113 inside the case 101. The insulating member 200 may include an insulating material. For example, the insulating member 200 may be formed of an insulating material such as polyethylene (PE), polypropylene (PP), polyethylene terephthalate (PET), or rubber. The insulating member 200 may be manufactured by, for example, injection molding.

The insulating member 200 may include a current collecting member penetration portion 201 and an insulating wall portion 210. The current collector portion 121 of the current collecting member 120 may pass through the insulating member 200 through the current collecting member penetration portion 201 and pass thorough the gasket 150 to be welded to the terminal 140.

The insulating wall portion 210 may be disposed around the (current) collecting member penetration portion 201 (see FIG. 6). The insulating member 200 may extend in the third direction (e.g., parallel to the Z-axis direction). The current collecting member penetration portion 201 may be formed in a central portion of the insulating member 200 in a longitudinal direction, and a pair of insulating wall portions 210 may be provided at both sides of the current collecting member penetration portion 201 in the longitudinal direction.

The current collecting member penetration portion 201 may include a pair of connecting portions 204 connecting the pair of insulating wall portions 210 and a center through hole 202 defined by the pair of connecting portions 204 and the pair of insulating wall portions 210. The planar shape and size of the center through hole 202 may correspond to the planar shape and size of the central portion 125 of the current collecting member 120. The central portion 125 may be fitted into the center through hole 202.

Each of the pair of insulating wall portions 210 may include a first spacing portion 220, a second spacing portion 225, and a skirt portion 213. The first spacing portion 220 may be spaced apart from the cap plate 131 in the first direction. The second spacing portion 225 may be connected stepwise to (e.g., at different elevations in the X-axis direction - see FIG. 5) the first spacing portion 220 and may be spaced further apart from the cap plate 131 in the first direction than the first spacing portion 220.

The first spacing portion 220 and the second spacing portion 225 may have a constant width in the second direction (e.g., parallel to the Y-axis direction) and may extend in the third direction. Each insulating wall portion 210 may include a pair of first spacing portions 220 and one second spacing portion 225. The second spacing portion 225 may be located between the pair of first spacing portions 220.

The skirt portion 213 may protrude from an outer peripheral edge of the pair of first spacing portions 220 and one second spacing portion 225 to come into contact with the side surface 136 of the cap plate 131. By the skirt portion 213, the first spacing portion 220 may be spaced apart from the side surface 136 of the cap plate 131 by a first distance DS1 (see FIG. 10), and the second spacing portion 225 may be spaced apart from the inner surface 136 of the cap plate 131 by a second distance DS2 larger than the first distance DS1.

The skirt portion 213 may be connected to the connecting portion 204 (see FIG. 6). Electrolyte through holes 217, which guide dispersion and smooth flow of an electrolyte when the electrolyte is injected into the internal space of the case 101 through an electrolyte injection hole of the cap plate 131, may be formed in the first spacing portion 220 and the second spacing portion 225.

The insulating member 200 may be (mechanically) coupled to the gasket 150. The gasket 150 may include hooks 161, 162, 171, 172, 181, 182, 191, and 192 (see FIGS. 6 and 7) protruding in a direction from the inner plate portion 151 toward the electrode assembly 113. The hooks 161, 162, 171, 172, 181, 182, 191, and 192 may be elastic and bendable. The insulating member 200 may include hook fastening portions to which the hooks 161, 162, 171, 172, 181, 182, 191, and 192 are fastened. The hook fastening portions may be formed in the insulating wall portions 210.

The hook fastening portions may include hook through holes 241, 251, 261, and 271 (see FIG. 6) through which the hooks 161, 162, 171, 172, 181, 182, 191, and 192 pass. In other words, the hooks 161, 162, 171, 172, 181, 182, 191, and 192 may fit into the corresponding hook through holes 241, 251, 261, and 271 of the hook fastening portions. In yet other words, the hooks 161, 162, 171, 172, 181, 182, 191, and 192 may be engaged (e.g. click-locked) into the hook through holes 241, 251, 261, and 271 of the hook fastening portions. That is, once the hooks are engaged into the hook fastening portions they form a stable mechanical coupling that cannot be uncoupled. A plurality of hooks 161, 162, 171, 172, 181, 182, 191, and 192 may be provided, for example, as multiple pairs of hooks. For example, the gasket 150 may include four pairs of hooks, that is, the total of eight hooks 161, 162, 171, 172, 181, 182, 191, and 192. Coupling the insulating member 200 with the gasket 150 by means of hooks allows quick and easy assembling.

Among the four pairs of hooks, a first pair of hooks 161 and 162 may be located closer to one corner portion among four corner portions of the inner plate portion 151 (see FIG. 7), a second pair of hooks 171 and 172 may be located closer to another corner portion among the four corner portions of the inner plate portion 151, a third pair of hooks 181 and 182 may be located closer to another corner portion among the four corner portions of the inner plate portion 151, and a fourth pair of hooks 191 and 192 may be located closer to the remaining corner portion among the four corner portions of the inner plate portion 151. This arrangement may provide improved mechanical coupling strength between insulating member 200 and the gasket 150.

A plurality of hook through holes 241, 251, 261, and 271 may be provided to correspond one-to-one with one pair of hooks 161 and 162, 171 and 172, 181 and 182, or 191 and 192. For example, four hook through holes 241, 251, 261, and 271 (see FIG. 6) may be provided. The first pair of hooks 161 and 162 may be fitted into a first hook through hole 241, the second pair of hooks 171 and 172 may be fitted into a second hook through hole 251, the third pair of hooks 181 and 182 may be fitted into a third hook through hole 261, and the fourth pair of hooks 191 and 192 may be fitted into a fourth hook through hole 271. The plurality of hook through holes 241, 251, 261, and 271 may be formed in the first spacing portion 220.

Each of the first pair of hooks 161, 162 may include a hook body portion 164 (see FIG. 8), a hook head portion 165, and a hook rib portion 168. The hook body portion 164 may protrude from the inner plate portion 151 toward the electrode assembly 113 in the first direction (e.g., parallel to the X-axis direction).

The hook head portion 165 may protrude from one side end portion of the hook body portion 164 in a direction intersecting a longitudinal direction of the hook body portion 164. The hook head portion 165 may be caught around the hook through hole 241 so as not to be separated from the hook through hole 241 when passing through the hook through hole 241.

A gap GP (see FIG. 10) between the first spacing portion 220 and the second spacing portion 225 in the first direction may be larger than a thickness HT of the hook head portion 165 in the first direction. Accordingly, even when the cap assembly 130 is coupled to the case 101 to close the opening 102, the hook head portion 165 does not come into contact with the pair of wing portions 127 (see FIG. 2) of the current collecting member 120, thereby preventing damage to the hook head portion 165, the wing portion 127, or the electrode tab 116 (see FIG. 4).

The first pair of hooks 161 and 162 fitted into the first hook through hole 241 may be spaced apart from each other (see FIG. 6). Similarly, among the plurality of hook through holes 241, 251, 261, and 271, one pair of hooks 161 and 162, 171 and 172, 181 and 182, or 191 and 192 fitted into the same one hook through hole may be spaced apart from each other.

The hook fastening portion may include a spacer disposed between the one pair of hooks 161 and 162, 171 and 172, 181 and 182, or 191 and 192 fastened to one hook fastening portion. For example, a spacer 247 (see FIG. 9) may be interposed between the first pair of hooks 161 and 162 in the first hook through hole 241.

The spacer 247 may protrude from the middle of a head portion contacting inner surface 243 in contact with the hook head portion 165 when the first pair of hooks 161 and 162 are fitted into the first hook through hole 241. The first pair of hooks 161 and 162 may be fitted into the first hook through hole 241 at an accurate location by the spacer 247.

When the first pair of hooks 161 and 162 are fitted into the first hook through hole 241, the pair of hook body portions 164 (see FIG. 8) included in the first pair of hooks 161 and 162 may be in close contact with an inner surface 245 (see FIG. 9) of the first hook through hole 241 and pressed in a direction closer to each other.

The hook rib portion 168 may protrude from the hook body portion 164 to be in close contact with the inner surface 245 of the hook through hole 241 and extend in a longitudinal direction of the hook body portion 164. A thickness RT (see FIG. 10) of the hook rib portion 168 may become thicker toward the hook head portion 165.

As shown in FIGS. 8 to 10, the first pair of hooks 161 and 162 may be in close contact with the facing inner surfaces 245 of the first hook through hole 241 via the hook rib portion 168. As a result, when the first pair of hooks 161 and 162 are fitted into the first hook through hole 241 so that the hook head portions 165 further protrude in the first direction (e.g., parallel to the X-axis direction) than the first spacing portion 220, the hook body portions 164 of the first pair of hooks 161 and 162 may be tilted closer to each other.

A pair of hook rib portions 168 may be in close contact with a pair of inner surfaces 245, and a front surface of the hook body portion 164 in the same direction as a protruding direction of the hook head portion 165 may be in close contact with a pair of head portion contacting inner surfaces 243 in contact with the hook head portion 165 when the pair of hooks 161 and 162 are fitted. Therefore, the insulating member 200 may be reliably coupled to the gasket 150.

Meanwhile, the gasket 150 may include a first pair of hooks 161A and 162A shown in FIGS. 11 and 12 instead of the first pair of hooks 161 and 162 shown in FIGS. 8 and 10. Referring to FIGS. 11 and 12, each of the first pair of hooks 161A and 162A may include a hook body portion 164 and a hook head portion 165.

The hook body portion 164 and the hook head portion 165 are the same as the hook body portion 164 and the hook head portion 165 that are described with reference to FIGS. 8 and 10 and are given the same reference numerals, so a duplicate description will be omitted.

Unlike the first pair of hooks 161 and 162 shown in FIGS. 8 and 10, the first pair of hooks 161A and 162A shown in FIGS. 11 and 12 do not include the hook rib portion 168. The hook body portions 164 of the first pair of hooks 161A and 162A shown in FIGS. 11 and 12 may be directly in close contact with the facing inner surfaces 245 of the first hook through hole 241.

Referring back to FIGS. 1 to 10, in addition to the first pair of hooks 161 and 162, other pairs of hooks included in the gasket 150, that is, the second pair of hooks 171 and 172, the third pair of hooks 181 and 182, and the fourth pair of hooks 191 and 192, may include the same hook body portion 164, hook head portion 165, and hook rib portion 168 as the first pair of hooks 161 and 162. Therefore, a duplicate description for the second pair of hooks 171 and 172, the third pair of hooks 181 and 182, and the fourth pair of hooks 191 and 192 will be omitted.

In addition, other hook through holes included in the insulating member 200 in addition to the first hook through hole 241, that is, the second hook through hole 251, the third hook through hole 261, and the fourth hook through hole 271, may have the same configurations as the first hook through hole 241. Therefore, a duplicate description for configurations of the second hook through hole 251, the third hook through hole 261, and the fourth hook through hole 271 will be omitted.

A direction in which at least one hook head portion 165 among the hook head portions 165 of the plurality of hooks 161, 162, 171, 172, 181, 182, 191, and 192 protrudes to intersect the hook body portion 164 may be different from a direction in which other hook head portions 165 protrude.

In this case, a pair of hook head portions 165 included in one pair of hooks 161 and 162, 171 and 172, 181 and 182, or 191 and 192 passing through any one hook through hole 241, 251, 261, or 271 among the plurality of hook through holes 241, 251, 261, and 271 may protrude in the same direction.

For example, as shown in FIG. 7, the pair of hook head portions 165 of the first pair of hooks 161 and 162 may protrude in a negative (-) direction of the Z-axis, the pair of hook head portions 165 of the second pair of hooks 171 and 172 may protrude in a positive (+) direction of the Y-axis, the pair of hook head portions 165 of the third pair of hooks 181 and 182 may protrude in a positive (+) direction of the Z-axis, and the pair of hook head portions 165 of the fourth pair of hooks 191 and 192 may protrude in a negative (-) direction of the Y-axis.

As described with reference to FIGS. 8 to 10, each pair of hooks 161 and 162, 171 and 172, 181 and 182, or 191 and 192 may be in close contact with a pair of facing inner surfaces 245 and the head portion contacting inner surfaces 243 of the corresponding hook through hole 241, 251, 261, or 271, and directions in which forces are applied due to the close contact intersect and are opposite. Therefore, when the insulating member 200 is coupled to the gasket 150, the insulating member 200 may be firmly fixed without shaking in the first direction and the third direction.

The hook head portions 165 of the multiple pairs of hooks 161 and 162, 171 and 172, 181 and 182, and 191 and 192 may protrude asymmetrically. Referring to FIG. 7, for example, among the multiple pairs of hooks 161 and 162, 171 and 172, 181 and 182, and 191 and 192, two pairs of hooks 161 and 162, and 191 and 192 may be located on a straight line L1 parallel to a longitudinal direction of the insulating member 200. A direction in which the hook head portions 165 included in one pair of hooks 161 and 162 among the two pairs of hooks 161 and 162, and 191 and 192 protrude may not be parallel to a direction in which the hook head portions 165 included in the other pair of hooks 191 and 192 among the two pairs of hooks 161 and 162, and 191 and 192 protrude, and the two directions may intersect each other.

Therefore, unless each pair of hooks 161 and 162, 171 and 172, 181 and 182, and 191 and 192 is accurately aligned with the corresponding hook through holes 241, 251, 261, and 271 and the insulating member 200 approximates the gasket 150, the insulating member 200 may not be coupled to the gasket 150. Therefore, component damage and assembly delay due to errors in an assembly process can be prevented. The spacers 247 (see FIG. 9) provided in the hook through holes 241, 251, 261, and 271 can also help prevent assembly errors when coupling the insulating member 200 to the gasket 150.

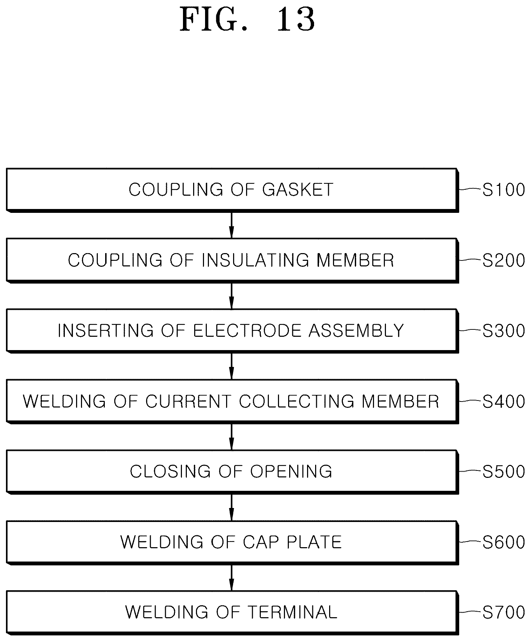

FIG. 13 is a flowchart showing a method of manufacturing a secondary battery according to one or more embodiments of the present disclosure. The method of manufacturing a secondary battery of FIG. 13 may be a method of manufacturing the secondary battery 100 described with reference to FIGS. 1 to 12.

Referring to FIGS. 1 to 13, the method of manufacturing a secondary battery may include operations of coupling a gasket S100, coupling an insulating member S200, inserting an electrode assembly S300, closing an opening S500, and welding a cap plate S600.

The coupling of the gasket S100 may be an operation of coupling the gasket 150 including an insulating material to the cap plate 131. For example, the gasket 150 may be coupled to the cap plate 131 by insertion injection molding.

The coupling of the insulating member S200 may be an operation of coupling the insulating member 200 including the insulating material to the gasket 150. The gasket 150 may include the inner plate portion 151 stacked on the side surface 136 of the cap plate 131 toward the electrode assembly 113 and the hooks 161, 162, 171, 172, 181, 182, 191, and 192 protruding in a direction from the inner plate portion 151 toward the electrode assembly 113. The insulating member 200 may include hook fastening portions to which the hooks 161, 162, 171, 172, 181, 182, 191, and 192 are fastened. The hook fastening portions may include the hook through holes 241, 251, 261, and 271.

The coupling of the insulating member S200 may include aligning the hook fastening portions with the hooks 161, 162, 171, 172, 181, 182, 191, and 192 and approximating the hook fastening portions to the gasket 150 to couple the insulating member 200 to the gasket 150. Since the specific configuration of the insulating member 200, the gasket 150, the hooks 161, 162, 171, 172, 181, 182, 191, and 192, and the hook through holes 241, 251, 261, and 271 has been described with reference to FIGS. 1 to 12, a duplicate description will be omitted.

The inserting of the electrode assembly S300 may be an operation of inserting the electrode assembly 113 into the case 101 through the opening 102 of the case 101. The closing of the opening S500 may be an operation of closing the opening 102 using the cap plate 131 so that the insulating member 200 is disposed between the cap plate 131 and the electrode assembly 113 inside the case 101. The welding of the cap plate S600 may be an operation of coupling the cap plate 131 to the case 101 by welding.

The method of manufacturing a secondary battery may further include operations of welding a current collecting member S400 and welding a terminal S700. The welding of the current collecting member S400 may be an operation of welding and coupling the current collecting member 120 to the electrode tab 116 of the electrode assembly 113 between the inserting of the electrode assembly S300 and the closing of the opening S500.

The welding of the terminal S700 may be an operation of mounting the terminal 140 on the gasket 150 and welding and coupling the terminal 140 to the current collecting member after the welding of the cap plate S600.

According to the secondary battery 100 and the method of manufacturing the secondary battery described above, the insulating member 200 may be coupled to the cap plate 131 via the gasket 150. Therefore, the process of attaching the insulating member 200 to the electrode assembly 113 using a double-sided adhesive tape in the manufacturing process of the secondary battery 100 can be omitted. Therefore, the productivity of the secondary battery 100 can be improved, and the cost can be reduced.

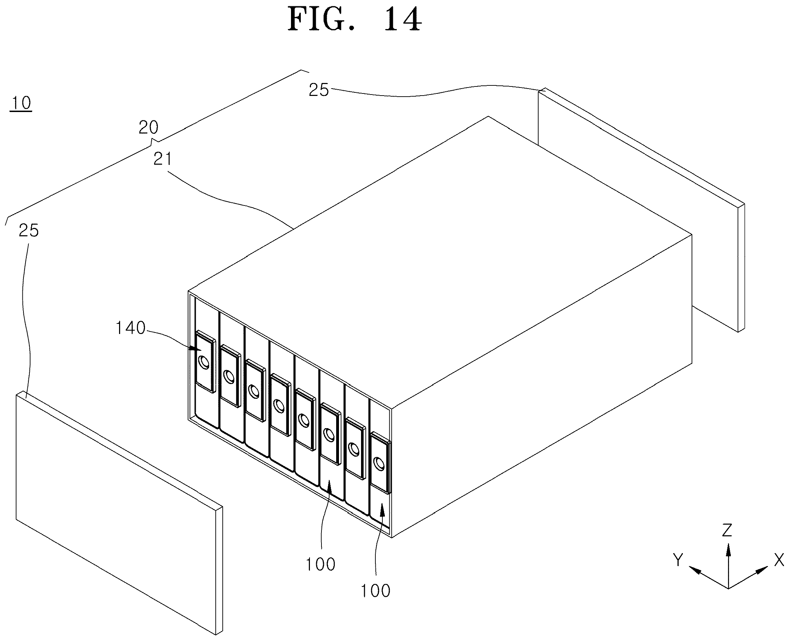

FIG. 14 is a perspective view schematically showing a battery pack according to one or more embodiments of the present disclosure. Referring to FIG. 14, a battery pack 10 according to one embodiment of the present disclosure may include a housing 20 and a plurality of secondary batteries 100. The housing 20 may form an approximate appearance of the battery pack 10 and may provide a space in which the plurality of secondary batteries 100 may be accommodated.

The housing 20 according to the present embodiment may include a box 21 and a pair of end plates 25. The box 21 may be provided with an internal space in which the plurality of secondary batteries 100 are accommodated.

The box 21 may be provided with openings at both sides thereof to expose the cap assemblies 130 (see FIG. 2) of both sides of the secondary batteries 100 in the longitudinal direction. The pair of end plates 25 may close the openings of both sides of the box 21 and may be coupled to the box 21.

The secondary battery 100 may function as a unit structure that stores and supplies power in the battery pack 10. A plurality of secondary batteries 100 may be provided. The plurality of secondary batteries 100 may be arranged, for example, in the second direction (e.g., stacked along the Y-axis direction).

The battery pack 10 may further include a bus bar that electrically connects the plurality of secondary batteries 100. The bus bar may be disposed between the end plates 25 and the secondary batteries 100. A plurality of bus bars may be provided. Each bus bar may connect a pair of adjacent secondary batteries 100 in series or in parallel.

According to the present disclosure, an insulating member is coupled to a cap plate via a gasket. Therefore, a process of attaching the insulating member to an electrode assembly using a double-sided adhesive tape in a manufacturing process of a secondary battery can be omitted. Therefore, the productivity of the secondary battery can be improved, and the cost can be reduced.

However, aspects and features of the present disclosure are not limited to those described above and other aspects and features not mentioned will be clearly understood by those skilled in the art from the detailed description given above.

Although the present disclosure has been described with reference to some embodiments and drawings illustrating aspects thereof, the present disclosure is not limited thereto. Various modifications and variations can be made by a person skilled in the art to which the present disclosure belongs within the scope of the disclosure and the claims and equivalents thereto.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (100), comprising:
a case (101) having an opening (102);
an electrode assembly (113) accommodated inside the case (101); and
a cap assembly (130) including:
a cap plate (131) closing the opening (102),
a terminal (140) coupled to the cap plate (131),
a gasket (150) supporting the terminal (140), the gasket (150) connected to the cap plate (131) and including an insulating material, and
an insulating member (200) including an insulating material, the insulating member (200) being between the cap plate (131) and the electrode assembly (113) inside the case (101), and the insulating member (200) being coupled to the gasket (150).

2. The secondary battery (100) as claimed in claim 1, wherein the gasket (150) further includes:
an inner plate portion (151) stacked on a side surface (136) of the cap plate (131) toward the electrode assembly (113); and
a hook (161, 162, 171, 172, 181, 182, 191, 192) protruding in a direction from the inner plate portion (151) toward the electrode assembly (113), and
wherein the insulating member (200) includes a hook fastening portion to which the hook (161, 162, 171, 172, 181, 182, 191, 192) is fastened.

3. The secondary battery (100) as claimed in claim 2, wherein the hook fastening portion includes a hook through hole (241, 251, 261, 271) in which the hook (161, 162, 171, 172, 181, 182, 191, 192) is inserted.

4. The secondary battery (100) as claimed in claim 3, wherein the hook (161, 162, 171, 172, 181, 182, 191, 192) includes:
a hook body portion (164) protruding from the inner plate portion (151); and
a hook head portion (165) protruding from one side end portion of the hook body portion (164) in a direction intersecting a longitudinal direction of the hook body portion (164), the hook head portion (165) being locked with the hook through hole (241, 251, 261, 271).

5. The secondary battery (100) as claimed in one of claims 3 or 4, wherein:
the hook (161, 162, 171, 172, 181, 182, 191, 192) includes a plurality of hooks (161, 162, 171, 172, 181, 182, 191, 192), the plurality of hooks (161, 162, 171, 172, 181, 182, 191, 192) including a plurality of hook body portions (164) and a plurality of hook head portions (165), and
a direction in which at least one of the plurality of hook head portions (165) protrudes differs from a direction in which another of the plurality of hook head portions (165) protrudes.

6. The secondary battery (100) as claimed in one of claims 3 to 5, wherein the insulating member (200) includes:
a first spacing portion (220) spaced apart from the cap plate (131), the first spacing portion (220) including the hook through hole (241, 251, 261, 271); and
a second spacing portion (225) connected stepwise to the first spacing portion (220), the second spacing portion (225) being further apart from the cap plate (131) than the first spacing portion (220), and
a size of a gap between the second spacing portion (225) and the first spacing portion (220) is larger than a thickness of the hook head portion (165).

7. The secondary battery (100) as claimed in claim 3, wherein the hook includes multiple pairs of hooks (161, 162, 171, 172, 181, 182, 191, 192), and wherein the multiple pairs of hooks (161, 162, 171, 172, 181, 182, 191, 192) include a plurality of hook through holes (241, 251, 261, 271), each of the plurality of hook through holes (241, 251, 261, 271) corresponding to one of the plurality of pairs of hooks (161, 162, 171, 172, 181, 182, 191, 192).

8. The secondary battery (100) as claimed in claim 7, wherein the multiple pairs of hooks (161, 162, 171, 172, 181, 182, 191, 192) include a plurality of hook head portions (165) inserted through the plurality of hook through holes (241, 251, 261, 271), the plurality of hook head portions (165) and the plurality of hook through holes (241, 251, 261, 271) protruding in a same direction.

9. The secondary battery (100) as claimed in one of claims 7 or 8, wherein the multiple pairs of hooks (161, 162, 171, 172, 181, 182, 191, 192) are in the plurality of hook through holes (241, 251, 261, 271), the multiple pairs of hooks (161, 162, 171, 172, 181, 182, 191, 192) and the plurality of hook through holes (241, 251, 261, 271) being spaced apart from each other.

10. The secondary battery (100) as claimed in one of claims 7 to 9, wherein each of the pair of hooks (161, 162, 171, 172, 181, 182) fitted into one hook through hole (241, 251, 261, 271) further includes a hook rib portion (168) protruding from one hook body portion (164) of the pair of hooks (161, 162, 171, 172, 181, 182) and extending in the longitudinal direction of the hook body portion (164) and being adapted to come into close contact with a inner surface (245) of the one hook through hole (241, 251, 261, 271).

11. A battery pack (10), comprising:
a housing (20); and
a plurality of secondary batteries according to at least one of the preceding claims in the housing (20),
wherein each of the plurality of the secondary batteries includes:
a case (101) with an opening (102),
an electrode assembly (113) accommodated inside the case (101), and
a cap assembly (130) including:
a cap plate (131) closing the opening (102),
a terminal (140) coupled to the cap plate (131), and
an insulating member (200) including an insulating material, the insulating member (200) being between the cap plate (131) and the electrode assembly (113) inside the case (101), the insulating member (200) being coupled to the cap plate (131).

12. A method of manufacturing a secondary battery (100), the method comprising:
coupling a gasket (150) to a cap plate (131), the gasket (150) including an insulating material;
coupling an insulating member (200) to the gasket (150), the insulating member (200) including an insulating material;
inserting an electrode assembly (113) into a case (101) through an opening (102) of the case (101);
closing the opening (102) with the cap plate (131) such that the insulating member (200) is between the cap plate (131) and the electrode assembly (113) inside the case (101); and
coupling the cap plate (131) to the case (101) by welding.

13. The method as claimed in claim 12, wherein the gasket (150) includes an inner plate portion (151) stacked on a side surface (136) of the cap plate (131) toward the electrode assembly (113) and a pair of hooks (161, 162, 171, 172, 181, 182, 191, 192) protruding from the inner plate portion (151) in a direction toward the electrode assembly (113),
the insulating member (200) includes a hook fastening portion to which the pair of hooks (161, 162, 171, 172, 181, 182, 191, 192) is fastened, and
coupling of the insulating member (200) to the gasket (150) includes:
aligning the hook fastening portion with the pair of hooks (161, 162, 171, 172, 181, 182, 191, 192) and approximating the hook fastening portion to the gasket (150) to couple the insulating member (200) to the gasket (150).

14. The method as claimed in claims 13, wherein the hook fastening portion includes a hook through hole (241, 251, 261, 271) with an inner surface (245) thereof, and each hook of the pair of hooks (161, 162, 171, 172, 181, 182, 191, 192) includes a hook body portion; and
the coupling of the insulating member (200) to the gasket (150) further includes:
when the pair of hooks (161, 162, 171, 172, 181, 182) are fitted into the hook through hole (241, 251, 261, 271), the hook body portions included in the pair of hooks (161, 162, 171, 172, 181, 182) come into close contact with the inner surface (245) of the hook through hole (241, 251, 261, 271), and the pair of body portions are pressed in a direction closer to each other.

15. The method as claimed in one of claims 13 or 14, further comprising:
coupling a current collecting member (120) to an electrode tab (116) of the electrode assembly (113) between inserting the electrode assembly (113) and closing the opening (102);
mounting a terminal (140) on the gasket (150); and
coupling the terminal (140) to the current collecting member (120) by welding after welding the cap plate (131).
